# EUROPEAN PATENT SPECIFICATION

(11) **EP 3 955 628 B1**
(45) Date of publication and mention of the grant of the patent: **04.06.2025**
(21) Application number: 20795649.1
(22) Date of filing: 17.04.2020
(51) Int. Cl.: H04W 36/00, H04W 24/10, H04W 24/02, H04W 36/36, H04W 74/0833, H04W 36/24

(54) **INFORMATION REPORTING AND RECEIVING METHODS AND APPARATUSES, AND RELATED DEVICE AND STORAGE MEDIUM**
VERFAHREN UND VORRICHTUNGEN ZUM MELDEN UND EMPFANGEN VON INFORMATIONEN SOWIE ZUGEHÖRIGE VORRICHTUNG UND SPEICHERMEDIUM
PROCÉDÉS ET APPAREILS DE RÉCEPTION ET DE NOTIFICATION D'INFORMATIONS, DISPOSITIF ASSOCIÉ ET SUPPORT D'INFORMATIONS

(30) Priority: 26.04.2019 CN 201910346460
(43) Date of publication of application: 16.02.2022
(73) Proprietor: China Mobile Communication Co., Ltd Research Institute, Beijing 100053 (CN); CHINA MOBILE COMMUNICATIONS GROUP CO., LTD., Beijing 100032 (CN)
(72) Inventor: XIE, Fang, Beijing 100053 (CN); LIU, Guangyi, Beijing 100053 (CN)
(74) Representative: J A Kemp LLP
(86) International application number: PCT/CN2020/085390
(87) International publication number: WO 2020/216148

(56) References cited:
- EP-A1- 3 358 901
- EP-B1- 2 810 469
- WO-A1-2018/156696
- WO-A1-2018/175721
- WO-A1-2018/188078
- WO-A1-2019/175463
- CN-A- 107 113 673
- CN-A- 108 243 469
- CN-A- 110 149 664
- CN-A- 110 831 081
- US-A1- 2012 106 356
- US-A1- 2020 045 602
- NOKIA ET AL: "Use cases for the SON study item", vol. RAN WG3, no. Chengdu, P.R. China; 20181008 - 20181012, 29 September 2018 (2018-09-29), XP051529106, Retrieved from the Internet <URL:http://www.3gpp.org/ftp/tsg%5Fran/WG3%5FIu/TSGR3%5F101bis/Docs/R3%2D185838%2Ezip> [retrieved on 20180929]
- ERICSSON: "On Reliability, overhead and controllability aspects of Conditional Handover", vol. RAN WG2, no. Athens, Greece; 20180226 - 20180302, 16 February 2018 (2018-02-16), XP051400473, Retrieved from the Internet <URL:http://www.3gpp.org/ftp/tsg%5Fran/WG2%5FRL2/TSGR2%5F101/Docs/> [retrieved on 20180216]
- HUAWEI ET AL: "Extension to Radio Link Failure report for MDT", 3GPP DRAFT; R2-105312 EXTENSION TO RADIO LINK FAILURE REPORT FOR MDT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Xi'an; 20101011, 30 September 2010 (2010-09-30), XP050452314
- CMCC: "The Reporting of CHO failure", vol. RAN WG2, no. Reno, Nevada, USA; 20191118 - 20191122, 17 November 2019 (2019-11-17), XP051826007, Retrieved from the Internet <URL:https://ftp.3gpp.org/Meetings_3GPP_SYNC/RAN2/Docs/R2-1916276.zip R2-1916276 The Reporting of CHO failure.doc> [retrieved on 20191117]
- MEDIATEK INC.: "Performance Evaluation and Implication for Conditional HO", 3GPP TSG-RAN WG2 MEETING #104 R2-1816960, 16 November 2018 (2018-11-16), XP051480899
- ETRI: "Considerations on Conditional Handover", 3GPP TSG-RAN WG2 MEETING #104 R2-1818047, 16 November 2018 (2018-11-16), XP051480899

## Description

### CROSS-REFERENCE TO RELATED APPLICATION

The application is based upon and claims priority to Chinese Patent Application No. 201910346460.2, filed on April 26, 2019.

### TECHNICAL FIELD

The present disclosure relates to the field of wireless communications, and in particular to an information reporting and receiving method and apparatus, a related device and a storage medium.

### BACKGROUND

Inter-cell Hand Over (HO) means that a mobile terminal, under the control of a radio access network, completes the migration of a radio link connection from a source cell to a target cell, and is the basic technical means to guarantee a seamless mobile communication service. Meanwhile, an HO mechanism in the related art is also called normal HO or immediate HO.

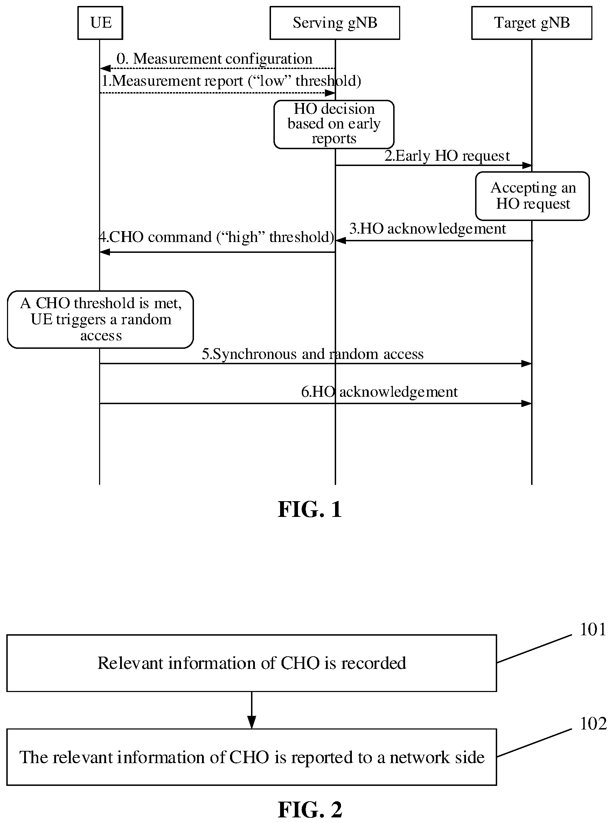

The HO mechanism is directly related to users' service experience in a wide area coverage network. A Conditional Hand Over (CHO) mechanism is proposed to improve the user experience in high-frequency or high-speed movement and reduce the failure rate of HO. As shown in FIG. 1, when User Equipment (UE) cannot complete HO properly due to a sudden deterioration of the channel quality between the UE and a serving cell (especially when the UE moves at a high frequency or high speed), a source base station may configure the UE to trigger measurement report at a lower threshold and carry a higher HO triggering threshold in an HO command. In the HO command, a random access resource that the UE uses in the target cell may also be carried. Once an HO threshold is met, the UE initiates a random access process to a target base station.

However, in the CHO mechanism, there is no effective solution on how to configure CHO parameters reasonably on a network side.

Related technologies can be found from WO2018188078A1, US2012106356A1, NOKIA ET AL: "Use cases for the SON study item", 3GPP DRAFT; R3-185838 SON USE CASES, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG3, no. Chengdu, P.R. China; 20181008-20181012 29 September 2018 (2018-09-29), XP051529106; ERICSSON: "On Reliability, overhead and controllability aspects of Conditional Handover", 3GPP DRAFT; R2-1803338 - ON RELIABILITY, OVERHEAD AND CONTROLLABILITY ASPECTS OF CONDITIONAL HANDOVER, 3RD GENERATION PARTNERSHIP PROJECT (3GPP), MOBILE COMPETENCE CENTRE; 650, ROUTE DES LUCIOLES; F, vol. RAN WG2, no. Athens, Greece; 20180226-20180302 16 February 2018 (2018-02-16), XP051400473; and HUAWEI ET AL: "Extension to Radio Link Failure report for MDT", 3GPP DRAFT; R2-105312 EXTENSION TO RADIO LINK FAILURE REPORT FOR MDT, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Xi'an; 20101011, 30 September 2010 (2010-09-30), XP050452314.

### SUMMARY

To solve the related technical problems, embodiments of the present disclosure provide an information reporting and receiving method and apparatus, a related device and a storage medium.

The present invention is defined in the independent claims, and advantageous embodiments are presented in the dependent claims.

With the information reporting and receiving method and apparatus, the related device and the storage medium provided by the embodiments of the present disclosure, the terminal records the relevant information of CHO and reports the relevant information of CHO to the network side. In this way, the network device may use the relevant information to adjust CHO parameters, so that the configured CHO parameters are more reasonable.

### BRIEF DESCRIPTION OF THE DRAWINGS

FIG. 1 is a flowchart of CHO in related art.
FIG. 2 is a flowchart of an information reporting method according to an embodiment of the present disclosure.
FIG. 3 is a flowchart of an information transmission method according to an embodiment of the present disclosure.
FIG. 4 is a structural schematic diagram of an information reporting apparatus according to an embodiment of the present disclosure.
FIG. 5 is a structural schematic diagram of an information receiving apparatus according to an embodiment of the present disclosure.
FIG. 6 is a structural schematic diagram of a terminal according to an embodiment of the present disclosure.
FIG. 7 is a structure diagram of a network device according to an embodiment of the present disclosure.
FIG. 8 is a structural schematic diagram of an information transmission system according to an embodiment of the present disclosure.

### DETAILED DESCRIPTION

The present disclosure is further described below in combination with the accompanying drawings and embodiments.

In a CHO mechanism, a base station may configure UE with CHO for multiple target cells, so how to reasonably configure CHO parameters is an urgent problem to be solved at present.

Based on this, in various embodiments of the present disclosure, when the CHO is performed, a terminal records relevant information of CHO and reports it to a network side, which can help the network side configure the reasonable CHO parameters.

The embodiments of the present disclosure provide an information reporting method, which is applied to a terminal. As shown in FIG. 2, the method may include the following steps.

At S201, relevant information of CHO is recorded.

At S202, the relevant information of CHO is reported to the network side.

The relevant information of CHO includes at least one of:
identity information of a first cell which is a serving cell that receives relevant configurations of CHO;
a first moment, which is a moment when the terminal initiates the CHO, or a moment when the terminal initiates a random access of the CHO;
a second moment, which is a moment when the terminal receives a normal HO command or an immediate HO command, or a moment when the terminal initiates normal HO or immediate HO;
a third moment, which is a moment when the terminal experiences an RLF, or a moment when the terminal reports the RLF, or a moment when the terminal loses an RRC connection with a source cell, or a moment when the terminal enters an idle state;
a fourth moment, which is a moment when the terminal initiates the CHO for the first time after receiving relevant configuration information of CHO, or a moment when the terminal initiates a random access of the CHO for the first time after receiving the relevant configuration information of CHO;
a time interval from a moment when the relevant configuration information of CHO is received by the terminal to the first moment;
a moment when the terminal receives the relevant configuration information of CHO;
a time interval from a moment when the relevant configuration information of CHO is received by the terminal to the second moment;
a moment when the terminal succeeds in or fails in the normal HO or the immediate HO;
a time interval from the first moment to success or failure of a corresponding CHO;
a moment when the CHO is failed or successful;
a time interval from a moment when the relevant configuration information of CHO is received by the terminal to success of the CHO at the terminal;
a time interval from a moment when the relevant configuration information of CHO is received by the terminal to failure of the CHO at the terminal;
a time interval from a moment when the relevant configuration information of CHO is received by the terminal to the third moment;
a time interval from the fourth moment and to success of the CHO at the terminal;
a time interval from the fourth moment to failure of the CHO at the terminal;
a time interval between the fourth moment and the third moment;
the number of times of initiating the CHO;
the number of CHO failures;
position information of the terminal when recording;
configuration of the CHO configured for the terminal, which is at least one of: an HO event or events, a corresponding threshold or thresholds, or an identity of a target cell; and
relevant information of a first service performed by the terminal; the first service is the service performed by the terminal when initiating the CHO, or the service performed by the terminal before initiating the HO.

In practical applications, because the relevant configuration information of CHO may be carried in an RRC reconfiguration (RRCReconfiguration) message, that the terminal receives the relevant configuration information of CHO may be that the terminal receives the RRC reconfiguration message.

It is to be noted that in the embodiments of the present disclosure, the time interval from a moment when the relevant configuration information of CHO is received by the terminal to other moments refers to the time interval between a moment when the terminal receives the relevant configuration information of CHO and other moments. Specifically, the time interval from a moment when the relevant configuration information of CHO is received by the terminal to the first moment refers to the time interval between a moment when the terminal receives the relevant configuration information of CHO and the first moment; the time interval from a moment when the relevant configuration information of CHO is received by the terminal to a moment when the terminal succeeds in the CHO refers to the time interval between a moment when the terminal receives the relevant configuration information of CHO and a moment when the terminal succeeds in the CHO; the time interval from a moment when the relevant configuration information of CHO is received by the terminal to a moment when the terminal fails in the CHO refers to the time interval between a moment when the terminal receives the relevant configuration information of CHO and a moment when the terminal fails in the CHO; and the time interval from a moment when the relevant configuration information of CHO is received by the terminal to the second moment refers to the time interval between a moment when the terminal receives the relevant configuration information of CHO and the second moment.

Correspondingly, the time interval from the corresponding moment to the success or failure of the CHO refers to the time interval between the corresponding moment and a moment when the corresponding CHO is successful or failed. Specifically, the time interval from the first moment to success or failure of a corresponding CHO (one of multiple CHOs initiated by the terminal) refers to the time interval between the first moment and a moment when the corresponding CHO is failed or successful; the time interval from the fourth moment to success of the CHO at the terminal refers to the time interval between the fourth moment and a moment when the terminal succeeds in the CHO; and the time interval from the fourth moment to failure of the CHO at the terminal refers to the time interval between the fourth moment and a moment when the terminal fails in the CHO.

The above time interval may also be understood as the time difference between two moments.

In the time interval from the first moment to the failure or success of the corresponding CHO, the corresponding CHO refers to the CHO corresponding to the first moment.

Immediate HO refers to the HO performed according to an immediate HO command. Correspondingly, normal HO refers to the HO performed according to a normal HO command.

The immediate HO command refers to a command that instructs the terminal to perform HO immediately. The normal HO command (not the immediate HO command) is an HO command corresponding to the immediate HO command.

The normal HO command may also be called a traditional HO command.

In practical applications, there may be various forms of the corresponding moment recorded. According to the different reference time, the forms of the corresponding moment recorded are different.

Based on this, in an embodiment, the corresponding moment recorded may have one of the following forms:
an offset from the reference time issued by the network side; and
absolute time.

In practical applications, for multiple HO conditions configured for the terminal, recording information related to the CHO initiated for the first time according to conditions in the configured CHO (which may also be understood as the first CHO) may better represent the rationality of network side configuration.

Based on this, in an embodiment, the CHO initiated by the terminal and involved in the above information is the first CHO initiated by the terminal according to the conditions in the CHO configured for it.

Specifically, in the above information, the time when the terminal initiates the CHO may be a moment when the terminal initiates the first CHO according to the conditions in the configured CHO.

The time when the terminal initiates a random access of the CHO may be a moment when the terminal initiates the random access of the first CHO according to the conditions in the configured CHO.

Of course, the terminal may also record the relevant information of each CHO initiated according to the conditions in the configured multiple HO conditions.

The failure of the CHO means that an RRC connection is not successfully established with a target cell. Correspondingly, the success of the CHO means that an RRC connection is successfully established with the target cell.

In practical applications, when the terminal determines that the CHO is failed according to the conditions in the configured multiple HO conditions, the RLF may be determined; and when the terminal loses the connection with the network, the RLF may also be determined.

In practical applications, the relevant information of the first service may include a Single-Network Slice Selection Assistance Info (S-NSSAI) ID, a 5G Quality of Service (QoS) indicator, a flow ID or a QoS Class Identifier (QCI), etc.

In an embodiment, the relevant information of CHO may also include:
identity information of a second cell.

The second cell is the target cell that initiates the CHO, or the target cell in which the random access of the CHO is successful or failed.

In practical applications, the relevant information recorded by the terminal may be required by some devices or may be predefined.

Based on this, in an embodiment, that the relevant information of CHO is recorded may include that:
the relevant information of CHO is recorded according to the configuration information issued by one of the following devices: base station; core network element; network management device; and TCE; or
the relevant information of CHO is recorded according to specified information.

When recording the relevant information of CHO according to the configuration information configured by the device, the terminal needs to acquire the configuration information configured by the device.

Based on this, in an embodiment, when the relevant information of CHO is recorded according to the received configuration information, the method may also include the following operation.

The configuration information sent by one of the following devices is received:
the base station; the core network element; the network management device; and the TCE.

Here, when recording the relevant information of CHO according to the configuration information configured by the base station, the terminal receives the configuration information sent by the base station; when recording the relevant information of CHO according to the configuration information configured by the core network element, the terminal receives the configuration information sent by the core network element; when recording the relevant information of CHO according to the configuration information configured by the network management device, the terminal receives the configuration information sent by the network management device; and when recording the relevant information of CHO according to the configuration information configured by the TCE, the terminal receives the configuration information sent by the TCE.

In practical applications, the main function of the TCE is to collect some information of the base station and the terminal for network device providers or carriers to use.

In practical applications, the terminal may use the existing message to report the relevant information of CHO, or use the newly defined message to report the relevant information of CHO.

Based on this, in an embodiment, that the relevant information of CHO is reported to the network side may include that:
the relevant information of CHO is reported to the network side via one of:
the RLF report;
the log measurement report information; or
the newly defined message.

The newly defined message may be called CHO information, etc. The format of the newly defined message may be determined as needed, for example, may refer to the format of the RLF report or the log measurement report information. The embodiments of the present disclosure do not limit the format of the newly defined message.

When the relevant information of CHO is reported, the terminal may be in a connected state, or in the process of changing from an idle state to the connected state, or in the idle state or an inactive state.

Based on this, in an embodiment, that the relevant information of CHO is reported to the network side may include one of:
the terminal reports the relevant information of CHO to the network side when being in the connected state;
the terminal reports the relevant information of CHO to the network side when the terminal is changing from the idle state to the connected state; and
the terminal reports the relevant information of CHO to the network side when being in the idle state or the inactive state.

When the terminal is in the idle state, the connections of both a wireless side and a core network are released. When the terminal is in the inactive state, the connection of the wireless side is released, but the connection of the core network still exists.

In practical applications, the reporting behavior of the terminal includes the following situations.

In the first situation, the network side requests the reporting.

In the second situation, the terminal reports initiatively.

In the third situation, the terminal notifies the network side of relevant log information and sends it at the request of the network side.

Based on this, in an embodiment, that the relevant information of CHO is reported to the network side may include one of:
the relevant information of CHO is reported initiatively to the network side;
after a request is received from the network side, the relevant information of CHO is reported to the network side;
the relevant information to be recorded is informed to the network side; and after the request sent from the network side based on the informed relevant information is received, the relevant information of CHO is reported to the network side.

Correspondingly, the embodiments of the present disclosure also provide an information receiving method, which is applied to a network device (specifically a base station, for example, the gNB in the 5-th generation mobile communication technology (5G) system), and may include that:
the relevant information of CHO reported and recorded by the terminal is received. The recorded relevant information of CHO includes at least one of:
the identity information of the first cell which is a serving cell that receives the relevant configurations of CHO;
the first moment, which is a moment when the terminal initiates the CHO, or a moment when the terminal initiates the random access of the CHO;
the second moment, which is a moment when the terminal receives the normal HO command or the immediate HO command, or a moment when the terminal initiates the normal HO or the immediate HO;
the third moment, which is a moment when the terminal determines the RLF, or a moment when the terminal reports the RLF, or a moment when the terminal loses the RRC connection with the source cell, or a moment when the terminal enters the idle state;
the fourth moment, which is a moment when the terminal initiates the CHO for the first time after receiving the relevant configuration information of CHO, or a moment when the terminal initiates the random access of the CHO for the first time after receiving the relevant configuration information of CHO;
the time interval from a moment when the relevant configuration information of CHO is received by the terminal to the first moment;
a moment when the terminal receives the relevant configuration information of CHO;
the time interval from a moment when the relevant configuration information of CHO is received by the terminal to the second moment;
a moment when the terminal succeeds in or fails in the normal HO or the immediate HO;
the time interval from the first moment to success or failure of a corresponding CHO;
a moment when the CHO is failed or successful;
the time interval from a moment when the relevant configuration information of CHO is received by the terminal to success of the CHO at the terminal;
the time interval from a moment when the relevant configuration information of CHO is received by the terminal to failure of the CHO at the terminal;
the time interval from a moment when the relevant configuration information of CHO is received by the terminal to the third moment;
the time interval from the fourth moment and to success of the CHO at the terminal;
the time interval from the fourth moment to failure of the CHO at the terminal;
the time interval between the fourth moment and the third moment;
the number of times of initiating the CHO;
the number of CHO failures;
the position information of the terminal when recording;
the configuration of the CHO configured for the terminal, which is at least one of: the HO event, the specific threshold, and the target cell identity; and
the relevant information of the first service performed by the terminal. The first service is the service performed by the terminal when initiating the CHO, or the service performed by the terminal before initiating the HO.

After receiving the relevant information of CHO, the network device may use the relevant information to adjust CHO parameters, so that the configured CHO parameters are more reasonable.

When recording the relevant information of CHO according to the configuration information configured by the network device, the network device needs to configure the relevant information.

Based on this, in an embodiment, the method may further include the following operation.

Information is configured for the terminal. The configured information is used for the terminal to record the relevant information of CHO.

In an embodiment, that the relevant information of CHO reported and recorded by the terminal is received may include the following operation.
the relevant information of CHO reported by the terminal is received via one of:
the RLF report;
the log measurement report information; or
the newly defined message.

In an embodiment, when the relevant information of CHO reported by the terminal is received, the terminal satisfies one of the following conditions:
the terminal is in the connected state;
the terminal is in the process of changing from the idle state to the connected state; and
the terminal is in the idle state or the inactive state.

In an embodiment, that the relevant information of CHO reported and recorded by the terminal is received may include one of:
the relevant information of CHO reported initiatively and recorded by the terminal is received;
a request is sent to the terminal; the relevant information of CHO reported by the terminal based on the request is received;
the relevant information to be recorded informed by the terminal is received; a request is sent based on the informed relevant information to be recorded; and the relevant information of CHO reported by the terminal based on the request is received.

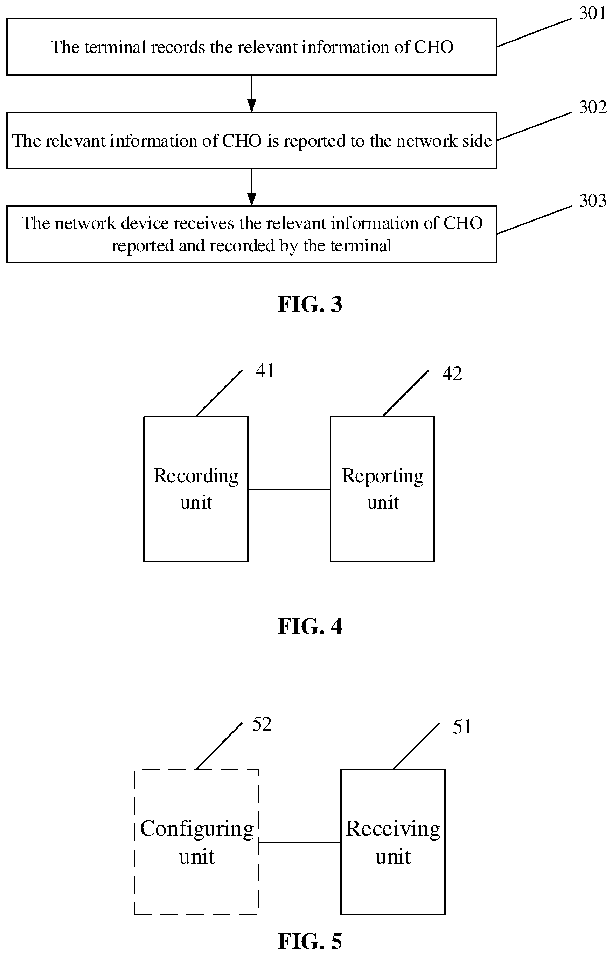

The embodiments of the present disclosure provide an information receiving method. As shown in FIG. 3, the method may include the following steps.

At S301, the terminal records the relevant information of CHO.

At S302, the relevant information of CHO is reported to the network side.

Here, the relevant information of CHO includes at least one of:
the identity information of the first cell which is a serving cell that receives the relevant configurations of CHO;
the first moment, which is a moment when the terminal initiates the CHO, or a moment when the terminal initiates the random access of the CHO;
the second moment, which is a moment when the terminal receives the normal HO command or the immediate HO command, or a moment when the terminal initiates the normal HO or the immediate HO;
the third moment, which is a moment when the terminal determines the RLF, or a moment when the terminal reports the RLF, or a moment when the terminal loses the RRC connection with the source cell, or a moment when the terminal enters the idle state;
the fourth moment, which is a moment when the terminal initiates the CHO for the first time after receiving the relevant configuration information of CHO, or a moment when the terminal initiates the random access of the CHO for the first time after receiving the relevant configuration information of CHO;
the time interval from a moment when the relevant configuration information of CHO is received by the terminal to the first moment;
a moment when the terminal receives the relevant configuration information of CHO;
the time interval from a moment when the relevant configuration information of CHO is received by the terminal to the second moment;
a moment when the terminal succeeds in or fails in the normal HO or the immediate HO;
the time interval from the first moment to success or failure of a corresponding CHO;
a moment when the CHO is failed or successful;
the time interval from a moment when the relevant configuration information of CHO is received by the terminal to success of the CHO at the terminal;
the time interval from a moment when the relevant configuration information of CHO is received by the terminal to failure of the CHO at the terminal;
the time interval from a moment when the relevant configuration information of CHO is received by the terminal to the third moment;
the time interval from the fourth moment and to success of the CHO at the terminal;
the time interval from the fourth moment to failure of the CHO at the terminal;
the time interval between the fourth moment and the third moment;
the number of times of initiating the CHO;
the number of CHO failures;
the position information of the terminal when recording;
the configuration of the CHO configured for the terminal, which is at least one of: the HO event, the specific threshold, and the target cell identity; and
the relevant information of the first service performed by the terminal. The first service is the service performed by the terminal when initiating the CHO, or the service performed by the terminal before initiating the HO.

At S303, the network device receives the relevant information of CHO reported and recorded by the terminal.

It is to be noted that the specific processing process of the terminal and the network device has been described in detail above and will not be repeated here.

With the information receiving method provided by the embodiments of the present disclosure, the terminal records the relevant information of CHO and reports it to the network side, so that the network device may use the relevant information to adjust the CHO parameters, and the configured CHO parameters are more reasonable.

In order to implement the method of the embodiments of the present disclosure, the embodiments of the present disclosure also provide an information reporting apparatus, which is arranged on the terminal. As shown in FIG. 4, the apparatus may include: a recording unit 41 and a reporting unit 42.

The recording unit 41 is configured to record the relevant information of CHO.

The reporting unit 42 is configured to report the relevant information of CHO to the network side. The relevant information of CHO includes at least one of:
the identity information of the first cell which is a serving cell that receives the relevant configurations of CHO;
the first moment, which is a moment when the terminal initiates the CHO, or a moment when the terminal initiates the random access of the CHO;
the second moment, which is a moment when the terminal receives the normal HO command or the immediate HO command, or a moment when the terminal initiates the normal HO or the immediate HO;
the third moment, which is a moment when the terminal determines the RLF, or a moment when the terminal reports the RLF, or a moment when the terminal loses the RRC connection with the source cell, or a moment when the terminal enters the idle state;
the fourth moment, which is a moment when the terminal initiates the CHO for the first time after receiving the relevant configuration information of CHO, or a moment when the terminal initiates the random access of the CHO for the first time after receiving the relevant configuration information of CHO;
the time interval from a moment when the relevant configuration information of CHO is received by the terminal to the first moment;
a moment when the terminal receives the relevant configuration information of CHO;
the time interval from a moment when the relevant configuration information of CHO is received by the terminal to the second moment;
a moment when the terminal succeeds in or fails in the normal HO or the immediate HO;
the time interval from the first moment to success or failure of a corresponding CHO;
a moment when the CHO is failed or successful;
the time interval from a moment when the relevant configuration information of CHO is received by the terminal to success of the CHO at the terminal;
the time interval from a moment when the relevant configuration information of CHO is received by the terminal to failure of the CHO at the terminal;
the time interval from a moment when the relevant configuration information of CHO is received by the terminal to the third moment;
the time interval from the fourth moment and to success of the CHO at the terminal;
the time interval from the fourth moment to failure of the CHO at the terminal;
the time interval between the fourth moment and the third moment;
the number of times of initiating the CHO;
the number of CHO failures;
the position information of the terminal when recording;
the configuration of the CHO configured for the terminal, which is at least one of: the HO event, the specific threshold, and the target cell identity; and
the relevant information of the first service performed by the terminal. The first service is the service performed by the terminal when initiating the CHO, or the service performed by the terminal before initiating the HO.

In an embodiment, the recording unit 41 is configured to:
record the relevant information of CHO according to the configuration information issued by one of the following devices: the base station; the core network element; the network management device; and the TCE; or
record the relevant information of CHO according to specified information.

In an embodiment, the recording unit 41 is further configured to receive the configuration information sent by one of the following devices:
the base station; the core network element; the network management device; and the TCE.

In an embodiment, the reporting unit 42 is configured to report the relevant information of CHO to the network side via one of:
the RLF report;
the log measurement report information; or
the newly defined message.

In an embodiment, the reporting unit 42 is configured to perform one of the following operations:
the terminal reports the relevant information of CHO to the network side when being in the connected state;
the terminal reports the relevant information of CHO to the network side when the terminal is changing from the idle state to the connected state; and
the terminal reports the relevant information of CHO to the network side when being in the idle state or the inactive state.

In an embodiment, the reporting unit 42 is configured to perform one of the following operations:
the relevant information of CHO is reported initiatively to the network side;
after a request is received from the network side, the relevant information of CHO is reported to the network side;
the relevant information to be recorded is informed to the network side; and after the request sent from the network side based on the informed relevant information is received, the relevant information of CHO is reported to the network side.

In practical applications, the recording unit 41 may be realized by a processor in the information reporting apparatus, and the reporting unit 42 may be realized by the processor in the information reporting apparatus in combination with a communication interface.

It is to be noted that when the information reporting apparatus provided by the embodiments reports the information, the apparatus is illustrated only by the division of each program module mentioned above. In practical applications, the above processing may be assigned to different program modules to complete according to needs, that is, the internal structure of the client device is divided into different program modules to complete all or part of the processing described above. In addition, the information reporting apparatus provided in the embodiments belongs to the same concept of the information reporting method embodiments, and details about a specific implementation process thereof refer to the method embodiments, and will not be elaborated herein.

In order to implement the method for the network device side of the embodiments of the present disclosure, the embodiments of the present disclosure also provide an information receiving apparatus, which is arranged on the network device. As shown in FIG. 5, the apparatus may include: a receiving unit 51.

The receiving unit 51 is configured to receive the relevant information of CHO reported and recorded by the terminal. The recorded relevant information of CHO includes at least one of:
the identity information of the first cell which is a serving cell that receives the relevant configurations of CHO;
the first moment, which is a moment when the terminal initiates the CHO, or a moment when the terminal initiates the random access of the CHO;
the second moment, which is a moment when the terminal receives the normal HO command or the immediate HO command, or a moment when the terminal initiates the normal HO or the immediate HO;
the third moment, which is a moment when the terminal determines the RLF, or a moment when the terminal reports the RLF, or a moment when the terminal loses the RRC connection with the source cell, or a moment when the terminal enters the idle state;
the fourth moment, which is a moment when the terminal initiates the CHO for the first time after receiving the relevant configuration information of CHO, or a moment when the terminal initiates the random access of the CHO for the first time after receiving the relevant configuration information of CHO;
the time interval from a moment when the relevant configuration information of CHO is received by the terminal to the first moment;
a moment when the terminal receives the relevant configuration information of CHO;
the time interval from a moment when the relevant configuration information of CHO is received by the terminal to the second moment;
a moment when the terminal succeeds in or fails in the normal HO or the immediate HO;
the time interval from the first moment to success or failure of a corresponding CHO;
a moment when the CHO is failed or successful;
the time interval from a moment when the relevant configuration information of CHO is received by the terminal to success of the CHO at the terminal;
the time interval from a moment when the relevant configuration information of CHO is received by the terminal to failure of the CHO at the terminal;
the time interval from a moment when the relevant configuration information of CHO is received by the terminal to the third moment;
the time interval from the fourth moment and to success of the CHO at the terminal;
the time interval from the fourth moment to failure of the CHO at the terminal;
the time interval between the fourth moment and the third moment;
the number of times of initiating the CHO;
the number of CHO failures;
the position information of the terminal when recording;
the configuration of the CHO configured for the terminal, which is at least one of: the HO event, the specific threshold, and the target cell identity; and
the relevant information of the first service performed by the terminal. The first service is the service performed by the terminal when initiating the CHO, or the service performed by the terminal before initiating the HO.

In an embodiment, as shown in FIG. 5, the apparatus may also include: a configuring unit 52, which is configured to configure information for the terminal. The configured information is used for the terminal to record the relevant information of CHO.

In an embodiment, the receiving unit 51 is configured to receive the relevant information of CHO reported by the terminal via one of:
the RLF report;
the log measurement report information; or
the newly defined message.

In an embodiment, when the relevant information of CHO reported by the terminal is received, the terminal satisfies one of the following conditions:
the terminal is in the connected state;
the terminal is in the process of changing from the idle state to the connected state; and
the terminal is in the idle state or the inactive state.

In an embodiment, the receiving unit 51 is configured to perform one of the following operations:
the relevant information of CHO reported initiatively and recorded by the terminal is received;
a request is sent to the terminal; the relevant information of CHO reported by the terminal based on the request is received;
the relevant information to be recorded informed by the terminal is received; a request is sent based on the informed relevant information to be recorded; and the relevant information of CHO reported by the terminal based on the request is received.

In practical applications, the receiving unit 51 and the configuring unit 52 may be realized by the processor in the information receiving apparatus in combination with a communication interface.

It is to be noted that when the information receiving apparatus provided by the embodiments receives the information, the apparatus is illustrated only by the division of each program module mentioned above. In practical applications, the above processing may be assigned to different program modules to complete according to needs, that is, the internal structure of the client device is divided into different program modules to complete all or part of the processing described above. In addition, the information receiving apparatus provided in the embodiments belongs to the same concept of the information receiving method embodiments, and details about a specific implementation process thereof refer to the method embodiments, and will not be elaborated herein.

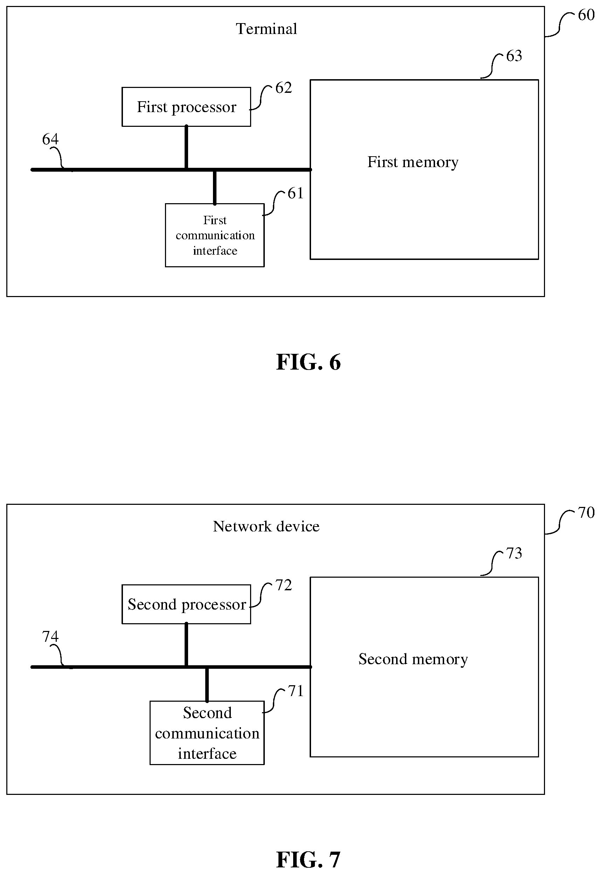

Based on hardware implementation of each program module, for implementing the method for the terminal side in the embodiments of the present disclosure, the embodiments of the present disclosure also provide a terminal. As shown in FIG. 6, the terminal 60 includes a first communication interface 61 and a first processor 62.

The first communication interface 61 can perform information interaction with the network device.

The first processor 62 is connected with the first communication interface 61 to implement information interaction with the network device, and is configured to run a computer program to execute the method provided in one or more technical solutions for the terminal side. The computer program is stored in a first memory 63.

Specifically, the first processor 62 is configured to record the relevant information of CHO.

The first communication interface 61 is configured to report the relevant information of CHO to the network side. The relevant information of CHO includes at least one of:
the identity information of the first cell which is a serving cell that receives the relevant configurations of CHO;
the first moment, which is a moment when the terminal initiates the CHO, or a moment when the terminal initiates the random access of the CHO;
the second moment, which is a moment when the terminal receives the normal HO command or the immediate HO command, or a moment when the terminal initiates the normal HO or the immediate HO;
the third moment, which is a moment when the terminal determines the RLF, or a moment when the terminal reports the RLF, or a moment when the terminal loses the RRC connection with the source cell, or a moment when the terminal enters the idle state;
the fourth moment, which is a moment when the terminal initiates the CHO for the first time after receiving the relevant configuration information of CHO, or a moment when the terminal initiates the random access of the CHO for the first time after receiving the relevant configuration information of CHO;
the time interval from a moment when the relevant configuration information of CHO is received by the terminal to the first moment;
a moment when the terminal receives the relevant configuration information of CHO;
the time interval from a moment when the relevant configuration information of CHO is received by the terminal to the second moment;
a moment when the terminal succeeds in or fails in the normal HO or the immediate HO;
the time interval from the first moment to success or failure of a corresponding CHO;
a moment when the CHO is failed or successful;
the time interval from a moment when the relevant configuration information of CHO is received by the terminal to success of the CHO at the terminal;
the time interval from a moment when the relevant configuration information of CHO is received by the terminal to failure of the CHO at the terminal;
the time interval from a moment when the relevant configuration information of CHO is received by the terminal to the third moment;
the time interval from the fourth moment and to success of the CHO at the terminal;
the time interval from the fourth moment to failure of the CHO at the terminal;
the time interval between the fourth moment and the third moment;
the number of times of initiating the CHO;
the number of CHO failures;
the position information of the terminal when recording;
the configuration of the CHO configured for the terminal, which is at least one of: the HO event, the specific threshold, and the target cell identity; and
the relevant information of the first service performed by the terminal. The first service is the service performed by the terminal when initiating the CHO, or the service performed by the terminal before initiating the HO.

In an embodiment, the first processor 62 is configured to:
record the relevant information of CHO according to the configuration information issued by one of the following devices: the base station; the core network element; the network management device; and the TCE; or
record the relevant information of CHO according to the specified information.

In an embodiment, the first communication interface 61 is further configured to receive the configuration information sent by one of the following devices:
the base station; the core network element; the network management device; and the TCE.

In an embodiment, the first communication interface 61 is configured to report the relevant information of CHO to the network side via one of:
the RLF report;
the log measurement report information; or
the newly defined message.

In an embodiment, the first communication interface 61 is configured to perform one of the following operations:
the terminal reports the relevant information of CHO to the network side when being in the connected state;
the terminal reports the relevant information of CHO to the network side when the terminal is changing from the idle state to the connected state; and
the terminal reports the relevant information of CHO to the network side when being in the idle state or the inactive state.

In an embodiment, the first communication interface 61 is configured to perform one of the following operations:
the relevant information of CHO is reported initiatively to the network side;
after a request is received from the network side, the relevant information of CHO is reported to the network side;
the relevant information to be recorded is informed to the network side; and after the request sent from the network side based on the informed relevant information is received, the relevant information of CHO is reported to the network side.

It is to be noted that the specific processing process of the first processor 62 and the first communication interface 61 is detailed in the method embodiments and will not be repeated here.

Of course, in practical applications, each component in the terminal 60 is coupled through a bus system 64. It may be understood that the bus system 64 is configured to implement connection communication between these components. The bus system 64 includes a data bus and further includes a power bus, a control bus and a state signal bus. However, for clear description, various buses in FIG. 6 are marked as the bus system 64.

The first memory 63 in the embodiments of the present disclosure is configured to store various types of data to support the operation of the terminal 60. Examples of the data include any computer program operated in the terminal 60.

The method disclosed in the embodiments of the present disclosure may be applied to the first processor 62 or implemented by the first processor 62. The first processor 62 may be an integrated circuit chip with a signal processing capability. In an implementation process, the steps of the method may be accomplished by an integrated logic circuit of hardware in the first processor 62 or an instruction in a software form. The first processor 62 may be a universal processor, a Digital Signal Processor (DSP) or another Programmable Logic Device (PLD), a discrete gate or transistor logic device, a discrete hardware component, etc. The first processor 62 may implement or execute each method, step and logical block diagram disclosed in the embodiments of the present disclosure. The universal processor may be a microprocessor, any conventional processor or the like. The steps of the method disclosed in combination with the embodiments of the present disclosure may be directly embodied to be executed and completed by a hardware decoding processor or executed and completed by a combination of hardware and software modules in the decoding processor. The software module may be located in a storage medium, and the storage medium is located in the first memory 63. The first processor 62 reads information in the first memory 63 and completes the steps of the method in combination with hardware.

In an exemplary embodiment, the terminal 60 may be realized by one or more Application Specific Integrated Circuits (ASICs), DSPs, Programmable Logic Devices (PLDs), Complex Programmable Logic Devices (CPLDs), Field-Programmable Gate Array (FPGAs), universal processors, controllers, Micro Controller Units (MCUs), microprocessors, or other electronic components, and is configured to execute the above method.

Based on hardware implementation of the above program modules, for implementing the method for the network device side in the embodiments of the present disclosure, as shown in FIG. 7, the network device 70 may include a second communication interface 71 and a second processor 72.

The second communication interface 71 can perform information interaction with the terminal.

The second processor 72 is connected with the second communication interface 71 to implement information interaction with the terminal, and is configured to run the computer program to execute the method provided in one or more technical solutions for the network device side. The computer program is stored in the second memory 73.

Specifically, the second processor 72 is configured to receive, through the second communication interface 71, the relevant information of CHO reported and recorded by the terminal. The recorded relevant information of CHO includes at least one of:
the identity information of the first cell which is a serving cell that receives the relevant configurations of CHO;
the first moment, which is a moment when the terminal initiates the CHO, or a moment when the terminal initiates the random access of the CHO;
the second moment, which is a moment when the terminal receives the normal HO command or the immediate HO command, or a moment when the terminal initiates the normal HO or the immediate HO;
the third moment, which is a moment when the terminal determines the RLF, or a moment when the terminal reports the RLF, or a moment when the terminal loses the RRC connection with the source cell, or a moment when the terminal enters the idle state;
the fourth moment, which is a moment when the terminal initiates the CHO for the first time after receiving the relevant configuration information of CHO, or a moment when the terminal initiates the random access of the CHO for the first time after receiving the relevant configuration information of CHO;
the time interval from a moment when the relevant configuration information of CHO is received by the terminal to the first moment;
a moment when the terminal receives the relevant configuration information of CHO;
the time interval from a moment when the relevant configuration information of CHO is received by the terminal to the second moment;
a moment when the terminal succeeds in or fails in the normal HO or the immediate HO;
the time interval from the first moment to success or failure of a corresponding CHO;
a moment when the CHO is failed or successful;
the time interval from a moment when the relevant configuration information of CHO is received by the terminal to success of the CHO at the terminal;
the time interval from a moment when the relevant configuration information of CHO is received by the terminal to failure of the CHO at the terminal;
the time interval from a moment when the relevant configuration information of CHO is received by the terminal to the third moment;
the time interval from the fourth moment and to success of the CHO at the terminal;
the time interval from the fourth moment to failure of the CHO at the terminal;
the time interval between the fourth moment and the third moment;
the number of times of initiating the CHO;
the number of CHO failures;
the position information of the terminal when recording;
the configuration of the CHO configured for the terminal, which is at least one of: the HO event, the specific threshold, and the target cell identity; and
the relevant information of the first service performed by the terminal. The first service is the service performed by the terminal when initiating the CHO, or the service performed by the terminal before initiating the HO.

In an embodiment, the second communication interface 71 is configured to receive the relevant information of CHO reported by the terminal via one of:
the RLF report;
the log measurement report information; or
the newly defined message.

In an embodiment, when the relevant information of CHO reported by the terminal is received, the terminal satisfies one of the following conditions:
the terminal is in the connected state;
the terminal is in the process of changing from the idle state to the connected state; and
the terminal is in the idle state or the inactive state.

In an embodiment, the second communication interface 71 is configured to perform one of the following operations:
the relevant information of CHO reported initiatively and recorded by the terminal is received;
a request is sent to the terminal; the relevant information of CHO reported by the terminal based on the request is received;
the relevant information to be recorded informed by the terminal is received; a request is sent based on the informed relevant information to be recorded; and the relevant information of CHO reported by the terminal based on the request is received.

It is to be noted that the specific processing process of the second processor 72 and the second communication interface 71 is detailed in the method embodiments and will not be repeated here.

Of course, in practical applications, each component in the network device 70 is coupled through a bus system 74. It may be understood that the bus system 74 is configured to implement connection communication between these components. The bus system 74 includes a data bus and further includes a power bus, a control bus and a state signal bus. However, for clear description, various buses in FIG. 7 are marked as the bus system 74.

The second memory 73 in the embodiments of the present disclosure is configured to store various types of data to support the operation of the network device 70. Examples of the data include any computer program operated in the network device 70.

The method disclosed in the embodiments of the present disclosure may be applied to the second processor 72 or implemented by the second processor 72. The second processor 72 may be an integrated circuit chip with a signal processing capability. In an implementation process, the steps of the method may be accomplished by an integrated logic circuit of hardware in the second processor 72 or an instruction in a software form. The second processor 72 may be a universal processor, a DSP or other PLD, a discrete gate or transistor logic device, a discrete hardware component, etc. The second processor 72 may implement or execute each method, step and logical block diagram disclosed in the embodiments of the present disclosure. The universal processor may be a microprocessor, any conventional processor or the like. The steps of the method disclosed in combination with the embodiments of the present disclosure may be directly embodied to be executed and completed by a hardware decoding processor or executed and completed by a combination of hardware and software modules in the decoding processor. The software module may be located in a storage medium, and the storage medium is located in the second memory 73. The second processor 72 reads information in the second memory 73 and completes the steps of the method in combination with hardware.

In an exemplary embodiment, the network device 70 may be realized by one or more ASICs, DSPs, PLDs, CPLDs, FPGAs, universal processors, controllers, MCUs, microprocessors, or other electronic components, and is configured to execute the above method.

Understandably, the memories (the first memory 63 and the second memory 73) in the embodiments of the present disclosure may be a volatile memory or a nonvolatile memory, or may include both the volatile and nonvolatile memories. The nonvolatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface storage, a compact disc, or a Compact Disc Read-Only Memory (CD-ROM). The magnetic surface memory may be a disk memory or a tape memory. The volatile memory may be a Random Access Memory (RAM), and is used as an external high-speed cache. It is exemplarily but unlimitedly described that RAMs in various forms may be adopted, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM) and a Direct Rambus Random Access Memory (DRRAM). The memory described in the embodiments of the present disclosure is intended to include, but not limited to, memories of these and any other proper types.

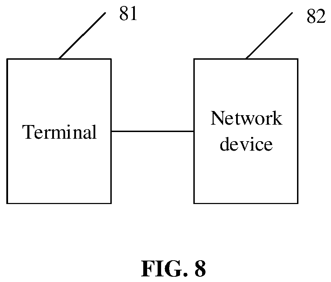

In order to implement the method of the embodiments of the present disclosure, the embodiments of the present disclosure also provide an information transmission system. As shown in FIG. 8, the system may include: a terminal 81 and a network device 82.

The terminal 81 is configured to record the relevant information of CHO, and report the relevant information of CHO to the network side.

The network device 82 is configured to receive the relevant information of CHO reported and recorded by the terminal 81.

It is to be noted that the specific processing process of the terminal 81 and the network device 82 has been described in detail above and will not be repeated here.

In an exemplary embodiment, the embodiments of the present disclosure also provide a storage medium, namely a computer storage medium, specifically a computer-readable storage medium, which includes, for example, the first memory 63 in which the computer program is stored. The computer program may be executed by the first processor 62 of the terminal 60 to complete the steps of the method for the terminal side. For another example, the storage medium includes the second memory 73 in which the computer program is stored. The computer program may be executed by the second processor 72 of the network device 70 to complete the steps of the method for the network device side. The computer-readable storage medium may be a memory such as an FRAM, a ROM, a PROM, an EPROM, an EEPROM, a flash memory, a magnetic surface memory, a compact disc, or a CD-ROM.

It is to be noted that "first", "second" and the like are adopted to distinguish similar objects and not intended to describe a specific sequence or order.

The above is only the preferred embodiments of the present disclosure and not intended to limit the protection scope of the present disclosure as defined by the claims.

## Claims

1. An information reporting method, applied to a terminal, comprising:
recording (101) relevant information of Conditional Hand Over, CHO; and
reporting (102) the relevant information of CHO to a network side;
**characterized in that**,
the relevant information of successful CHO comprises at least one of:
a time interval from a moment when relevant configuration information of CHO is received by the terminal to a first moment, wherein the relevant configuration information of CHO is carried in a Radio Resource Control, RRC, reconfiguration message received by the terminal;
a time interval from a first moment to success of a corresponding CHO;
a moment when the CHO is successful;
a time interval from a moment when relevant configuration information of CHO is received by the terminal to success of the CHO at the terminal;
a time interval from a fourth moment and to success of the CHO at the terminal; or
configuration of the CHO configured for the terminal, the configuration including a Hand Over event or events, a corresponding threshold or thresholds, and an identity of a target cell;
wherein the first moment is a moment when the terminal initiates the CHO, or a moment when the terminal initiates a random access of the CHO, and the fourth moment is a moment when the terminal initiates the CHO for a first time after receiving the relevant configuration information of CHO, or a moment when the terminal initiates a random access of the CHO for a first time after receiving the relevant configuration information of CHO.

2. The method of claim 1, wherein the relevant information of CHO further comprises:
identity information of a second cell; the second cell is a target cell for which the CHO is initiated, or a target cell for which a random access of the CHO is successful or failed.

3. The method of claim 1, wherein a corresponding recorded moment is in one of following forms:
an offset from reference time issued by the network side; or
absolute time.

4. The method of claim 1, wherein the CHO initiated by the terminal is a CHO initiated by the terminal for a first time according to conditions in the CHO configured for the terminal.

5. The method of claim 1, wherein recording the relevant information of CHO comprises:
recording the relevant information of CHO according to configuration information issued by one of a network device, a network management device, or a Trace Collection Entity, TCE; or
recording the relevant information of CHO according to specified information.

6. The method of claim 1, wherein reporting the relevant information of CHO to the network side comprises:
reporting the relevant information of CHO to the network side via one of:
RLF report;
log measurement report information; or
a newly defined message.

7. The method of claim 1, wherein reporting the relevant information of CHO to the network side comprises one of:
reporting initiatively the relevant information of CHO to the network side;
after receiving a request from the network side, reporting the relevant information of CHO to the network side; or
informing the network side of the relevant information to be recorded; and after receiving a request sent from the network side based on the informed relevant information, reporting the relevant information of CHO to the network side.

8. An information receiving method, applied to a network device, comprising:
receiving (303) relevant information of Conditional Hand Over, CHO, reported and recorded by a terminal;
**characterized in that**,
the recorded relevant information of successful CHO comprises at least one of:
a time interval from a moment when relevant configuration information of CHO is received by the terminal to a first moment, wherein the relevant configuration information of CHO is carried in a Radio Resource Control, RRC, reconfiguration message received by the terminal;
a time interval from the first moment to success of a corresponding CHO;
a moment when the CHO is successful;
a time interval from a moment when the relevant configuration information of CHO is received by the terminal to success of the CHO at the terminal;
a time interval from a fourth moment and to success of the CHO at the terminal; or
configuration of the CHO configured for the terminal, the configuration including a Hand Over, event or events, a corresponding threshold or thresholds, and an identity of a target cell;
wherein the first moment is a moment when the terminal initiates the CHO, or a moment when the terminal initiates a random access of the CHO, and the fourth moment is a moment when the terminal initiates the CHO for a first time after receiving the relevant configuration information of CHO, or a moment when the terminal initiates a random access of the CHO for a first time after receiving the relevant configuration information of CHO.

9. The method of claim 8, wherein the relevant information of CHO further comprises:
identity information of a second cell; the second cell is a target cell for which the CHO is initiated, or a target cell for which a random access of the CHO is successful or failed.

10. The method of claim 8, wherein the CHO initiated by the terminal is a CHO initiated by the terminal for a first time according to conditions in the CHO configured for the terminal.

11. The method of claim 8, wherein a corresponding recorded moment is in one of following forms: an offset from reference time issued by the network side; or absolute time, and/or
wherein receiving the relevant information of CHO reported and recorded by the terminal comprises: receiving the relevant information of CHO reported by the terminal via one of: RLF report; log measurement report information; or a newly defined message.

12. The method of claim 8, wherein receiving the relevant information of CHO reported and recorded by the terminal comprises one of:
receiving the relevant information of CHO reported initiatively and recorded by the terminal;
sending a request to the terminal, and receiving the relevant information of CHO reported by the terminal based on the request; or
receiving relevant information to be recorded informed by the terminal, sending a request based on the informed information to be recorded and receiving the relevant information of CHO reported by the terminal based on the request.

13. A terminal, comprising: a first processor and a first memory configured to store a computer program executable by the processor;
the first processor is configured to execute, when running the computer program, steps of the method of any one of claims 1 to 7.

14. A network device, comprising: a second processor and a second memory configured to store a computer program executable by the processor;
the second processor is configured to execute, when running the computer program, steps of the method of any one of claims 8 to 12.

## Patentansprüche

1. Verfahren zum Melden von Informationen, angewandt auf ein Endgerät, umfassend:
Aufzeichnen (101) relevanter Informationen des Conditional Hand Over, CHO; und
Melden (102) der relevanten Informationen des CHO an eine Netzwerkseite;
**dadurch gekennzeichnet, dass**
die relevanten Informationen über einen erfolgreichen CHO wenigstens eines umfassen von:
einem Zeitintervall von einem Zeitpunkt, zu dem relevante Konfigurationsinformationen des CHO durch das Endgerät empfangen werden, bis zu einem ersten Zeitpunkt, wobei die relevanten Konfigurationsinformationen des CHO in einer von dem Endgerät empfangenen Radio Resource Control, RCC-, Rekonfigurationsnachricht getragen werden;
einem Zeitintervall von einem ersten Zeitpunkt bis zu dem Erfolg eines entsprechenden CHO;
einem Zeitpunkt, zu dem der CHO erfolgreich ist;
einem Zeitintervall von einem Zeitpunkt, zu dem relevante Konfigurationsinformationen des CHO von dem Endgerät empfangen werden, bis zu dem Erfolg des CHO an dem Endgerät;
einem Zeitintervall von einem vierten Zeitpunkt und bis zu dem Erfolg des CHO an dem Endgerät; oder
einer Konfiguration des CHO, der für das Endgerät konfiguriert ist, wobei die Konfiguration ein Hand-Over-Ereignis oder -Ereignisse, eine entsprechende Schwelle oder Schwellen und eine Identität von einer Zielzelle beinhaltet;
wobei der erste Zeitpunkt ein Zeitpunkt, zu dem das Endgerät den CHO initiiert, oder ein Zeitpunkt ist, zu dem das Endgerät einen zufälligen Zugriff des CHO einleitet, und der vierte Zeitpunkt ein Zeitpunkt, zu dem das Endgerät den CHO zum ersten Mal nach dem Empfang der relevanten Konfigurationsinformationen des CHO initiiert, oder ein Zeitpunkt ist, zu dem das Endgerät einen zufälligen Zugriff des CHO für einen ersten Zeitpunkt nach dem Empfang der relevanten Konfigurationsinformationen des CHO initiiert.

2. Verfahren nach Anspruch 1, wobei die relevanten Informationen des CHO ferner umfassen:
Identitätsinformationen einer zweiten Zelle; wobei die zweite Zelle eine Zielzelle, für die der CHO initiiert wurde, oder eine Zielzelle ist, für die ein zufälliger Zugriff des CHO erfolgreich oder fehlgeschlagen ist.

3. Verfahren nach Anspruch 1, wobei ein entsprechender aufgezeichneter Zeitpunkt in einer der folgenden Formen vorliegt:
einem Versatz von der Referenzzeit, die von der Netzwerkseite ausgegeben wird; oder
der absoluten Zeit.

4. Verfahren nach Anspruch 1, wobei der von dem Endgerät initiierte CHO ein CHO ist, der von dem Endgerät für einen ersten Zeitpunkt gemäß den Bedingungen in dem CHO initiiert wird, der für das Endgerät konfiguriert ist.

5. Verfahren nach Anspruch 1, wobei das Aufzeichnen der relevanten Informationen des CHO umfasst:
Aufzeichnen der relevanten Informationen des CHO gemäß Konfigurationsinformationen, die von einem einer Netzwerkvorrichtung, einer Netzwerkverwaltungsvorrichtung oder einer Trace Collection Entity, TCE, ausgegeben werden; oder
Aufzeichnen der relevanten Informationen des CHO gemäß spezifizierten Informationen.

6. Verfahren nach Anspruch 1, wobei das Melden der relevanten Informationen des CHO an die Netzwerkseite umfasst:
Melden der relevanten Informationen des CHO an die Netzwerkseite über einen von:
einem RLF-Bericht;
Protokollmessungsmeldungsinformationen; oder
einer neu definierten Nachricht.

7. Verfahren nach Anspruch 1, wobei das Berichten der relevanten Informationen des CHO an die Netzwerkseite eines umfasst von:
initiativem Melden der relevanten Informationen des CHO an die Netzwerkseite;
nach dem Empfangen einer Anforderung von der Netzwerkseite, Melden der relevanten Informationen des CHO an die Netzwerkseite; oder
Informieren der Netzwerkseite über die aufzuzeichnenden relevanten Informationen; und nach dem Empfangen einer Anfrage, die von der Netzwerkseite auf Grundlage der informierten relevanten Informationen gesendet wird, Melden der relevanten Informationen des CHO an die Netzwerkseite.

8. Verfahren zum Empfangen von Informationen, angewandt auf eine Netzwerkvorrichtung, umfassend:
Empfangen (303) relevanter Information des Conditional Hand Over, CHO, die von einem Endgerät gemeldet und aufgezeichnet werden;
**dadurch gekennzeichnet, dass**
die aufgezeichneten relevanten Informationen über einen erfolgreichen CHO wenigstens eines umfassen von:
einem Zeitintervall von einem Zeitpunkt, zu dem relevante Konfigurationsinformationen des CHO durch das Endgerät empfangen werden, bis zu einem ersten Zeitpunkt, wobei die relevanten Konfigurationsinformationen des CHO in einer von dem Endgerät empfangenen Radio Resource Control, RCC-, Rekonfigurationsnachricht getragen werden;
einem Zeitintervall von einem ersten Zeitpunkt bis zu dem Erfolg eines entsprechenden CHO;
einem Zeitpunkt, zu dem der CHO erfolgreich ist;
einem Zeitintervall von einem Zeitpunkt, zu dem relevante Konfigurationsinformationen des CHO von dem Endgerät empfangen werden, bis zu dem Erfolg des CHO an dem Endgerät;
einem Zeitintervall von einem vierten Zeitpunkt und bis zu dem Erfolg des CHO an dem Endgerät; oder
einer Konfiguration des CHO, der für das Endgerät konfiguriert ist, wobei die Konfiguration ein Hand-Over-Ereignis oder -Ereignisse, eine entsprechende Schwelle oder Schwellen und eine Identität von einer Zielzelle beinhaltet;
wobei der erste Zeitpunkt ein Zeitpunkt, zu dem das Endgerät den CHO initiiert, oder ein Zeitpunkt ist, zu dem das Endgerät einen zufälligen Zugriff des CHO initiiert, und der vierte Zeitpunkt ein Zeitpunkt, zu dem das Endgerät den CHO zum ersten Mal nach dem Empfang der relevanten Konfigurationsinformationen des CHO initiiert, oder ein Zeitpunkt ist, zu dem das Endgerät einen zufälligen Zugriff des CHO für einen ersten Zeitpunkt nach dem Empfang der relevanten Konfigurationsinformationen des CHO initiiert.

9. Verfahren nach Anspruch 8, wobei die relevanten Informationen des CHO ferner umfassen:
Identitätsinformationen einer zweiten Zelle; wobei die zweite Zelle eine Zielzelle, für die der CHO initiiert wurde, oder eine Zielzelle ist, für die ein zufälliger Zugriff des CHO erfolgreich oder fehlgeschlagen ist.

10. Verfahren nach Anspruch 8, wobei der von dem Endgerät initiierte CHO ein CHO ist, der von dem Endgerät für einen ersten Zeitpunkt gemäß den Bedingungen in dem CHO initiiert wird, der für das Endgerät konfiguriert ist.

11. Verfahren nach Anspruch 8, wobei ein entsprechender aufgezeichneter Zeitpunkt in einer der folgenden Formen vorliegt: einem Versatz von der Referenzzeit, die von der Netzwerkseite ausgegeben wird; oder absoluter Zeit, und/oder
wobei das Empfangen der relevanten Informationen des CHO, die durch das Endgerät gemeldet und aufgezeichnet werden, umfasst: Empfangen der relevanten Informationen des CHO, die durch das Endgerät über eines gemeldet werden von: einem RLF-Bericht; Protokollmessungsberichtsinformationen; oder einer neu definierten Nachricht.

12. Verfahren nach Anspruch 8, wobei das Empfangen der relevanten Informationen des CHO, die durch das Endgerät gemeldet und aufgezeichnet werden, eines umfasst von:
Empfangen der relevanten Informationen des CHO, die von dem Endgerät initiativ gemeldet und aufgezeichnet werden;
Senden einer Anforderung an das Endgerät und Empfangen der relevanten Informationen des CHO, die von dem Endgerät auf Grundlage der Anforderung gemeldet werden; oder
Empfangen relevanter, aufzuzeichnender Informationen, die von dem Endgerät mitgeteilt wurden, Senden einer Anforderung auf Grundlage der aufzuzeichnenden mitgeteilten Informationen und Empfangen der relevanten Informationen des CHO, die von dem Endgerät auf Grundlage der Anforderung gemeldet werden.

13. Endgerät, umfassend: einen ersten Prozessor und einen ersten Speicher, der dazu konfiguriert ist, ein Computerprogramm zu speichern, das durch den Prozessor ausgeführt werden kann;
der erste Prozessor dazu konfiguriert ist, beim Ausführen des Computerprogramms Schritte des Verfahrens nach einem der Ansprüche 1 bis 7 auszuführen.

14. Netzwerkvorrichtung, umfassend: einen zweiten Prozessor und einen zweiten Speicher, der dazu konfiguriert ist, ein Computerprogramm zu speichern, das durch den Prozessor ausgeführt werden kann;
der zweite Prozessor dazu konfiguriert ist, beim Ausführen des Computerprogramms Schritte des Verfahrens nach einem der Ansprüche 8 bis 12 auszuführen.

## Revendications

1. Procédé de signalement d'informations, appliqué à un terminal, comprenant :
l'enregistrement (101) d'informations d'intérêt de transfert conditionnel, CHO ; et
le signalement (102) des informations d'intérêt de CHO à un côté de réseau ;
**caractérisé en ce que**,
les informations d'intérêt de CHO réussi comprennent au moins l'un parmi :
un intervalle de temps entre un moment où des informations de configuration d'intérêt de CHO sont reçues par le terminal et un premier moment, dans lequel les informations de configuration d'intérêt de CHO sont acheminées dans un message de reconfiguration de commande de ressources radio, RRC, reçu par le terminal ;
un intervalle de temps entre un premier moment et la réussite d'un CHO correspondant ;
un moment où le CHO est réussi ;
un intervalle de temps entre un moment où des informations de configuration d'intérêt de CHO sont reçues par le terminal et la réussite du CHO au niveau du terminal ;
un intervalle de temps entre un quatrième moment et la réussite du CHO au niveau du terminal ; ou
la configuration du CHO configuré pour le terminal, la configuration incluant un événement ou des événements de transfert, un seuil ou des seuils correspondants, et une identité d'une cellule cible ;
dans lequel le premier moment est un moment où le terminal déclenche le CHO, ou un moment où le terminal déclenche un accès aléatoire du CHO, et le quatrième moment est un moment où le terminal déclenche le CHO pour la première fois après avoir reçu les informations de configuration d'intérêt de CHO, ou un moment où le terminal déclenche un accès aléatoire du CHO pour la première fois après avoir reçu les informations de configuration d'intérêt de CHO.

2. Procédé selon la revendication 1, dans lequel les informations d'intérêt de CHO comprennent en outre :
des informations d'identité d'une deuxième cellule ; la deuxième cellule est une cellule cible pour laquelle le CHO est déclenché, ou une cellule cible pour laquelle un accès aléatoire du CHO est réussi ou a échoué.

3. Procédé selon la revendication 1, dans lequel un moment enregistré correspondant se présente sous l'une des formes suivantes :
un décalage par rapport à un temps de référence émis par le côté réseau ; ou
le temps absolu.

4. Procédé selon la revendication 1, dans lequel le CHO déclenché par le terminal est un CHO déclenché par le terminal pour la première fois selon des conditions dans le CHO configuré pour le terminal.

5. Procédé selon la revendication 1, dans lequel l'enregistrement des informations d'intérêt de CHO comprend :
l'enregistrement des informations d'intérêt de CHO selon des informations de configuration émises par l'un parmi un dispositif de réseau, un dispositif de gestion de réseau, ou une entité de collecte de traces, TCE ; ou
l'enregistrement des informations d'intérêt de CHO selon des informations spécifiées.

6. Procédé selon la revendication 1, dans lequel le signalement des informations d'intérêt de CHO au côté réseau comprend :
le signalement d'informations d'intérêt de CHO au côté réseau par l'intermédiaire de l'un parmi :
un signalement RLF ;
des informations de signalement de mesure de journal ; ou
un message nouvellement défini.

7. Procédé selon la revendication 1, dans lequel le signalement des informations d'intérêt de CHO au côté réseau comprend l'un parmi :
le signalement sur initiative des informations d'intérêt de CHO au côté réseau ;
après la réception d'une demande à partir du côté réseau, le signalement des informations d'intérêt de CHO au côté réseau ; ou
l'information du côté réseau des informations d'intérêt à enregistrer ; et après la réception d'une demande envoyée à partir du côté réseau sur la base des informations d'intérêt informées, le signalement des informations d'intérêt de CHO au côté réseau.

8. Procédé de réception d'informations, appliqué à un dispositif de réseau, comprenant :
la réception (303) d'informations d'intérêt de transfert conditionnel, CHO, signalées et enregistrées par un terminal ;
**caractérisé en ce que**,
les informations d'intérêt de CHO réussi enregistrées comprennent au moins l'un parmi :
un intervalle de temps entre un moment où des informations de configuration d'intérêt de CHO sont reçues par le terminal et un premier moment, dans lequel les informations de configuration d'intérêt de CHO sont acheminées dans un message de reconfiguration de commande de ressources radio, RRC, reçu par le terminal ;
un intervalle de temps entre le premier moment et la réussite d'un CHO correspondant ;
un moment où le CHO est réussi ;
un intervalle de temps entre un moment où les informations de configuration d'intérêt de CHO sont reçues par le terminal et la réussite du CHO au niveau du terminal ;
un intervalle de temps entre un quatrième moment et la réussite du CHO au niveau du terminal ; ou
la configuration du CHO configuré pour le terminal, la configuration comprenant un événement ou des événements de transfert, un seuil ou des seuils correspondants, et une identité d'une cellule cible ;
dans lequel le premier moment est un moment où le terminal déclenche le CHO, ou un moment où le terminal déclenche un accès aléatoire du CHO, et le quatrième moment est un moment où le terminal déclenche le CHO pour la première fois après avoir reçu les informations de configuration d'intérêt de CHO, ou un moment où le terminal déclenche un accès aléatoire du CHO pour la première fois après avoir reçu les informations de configuration d'intérêt de CHO.

9. Procédé selon la revendication 8, dans lequel les informations d'intérêt de CHO comprennent en outre :
des informations d'identité d'une deuxième cellule ; la deuxième cellule est une cellule cible pour laquelle le CHO est déclenché, ou une cellule cible pour laquelle un accès aléatoire du CHO est réussi ou a échoué.

10. Procédé selon la revendication 8, dans lequel le CHO déclenché par le terminal est un CHO déclenché par le terminal pour la première fois selon des conditions dans le CHO configuré pour le terminal.

11. Procédé selon la revendication 8, dans lequel un moment enregistré correspondant se présente sous l'une des formes suivantes : un décalage par rapport à un temps de référence émis par le côté réseau ; ou le temps absolu, et/ou
dans lequel la réception des informations d'intérêt de CHO signalées et enregistrées par le terminal comprend : la réception des informations d'intérêt de CHO signalées par le terminal par l'intermédiaire de l'un parmi : un signalement RLF ; des informations de signalement de mesure de journal ; ou un message nouvellement défini.

12. Procédé selon la revendication 8, dans lequel la réception des informations d'intérêt de CHO signalées et enregistrées par le terminal comprend l'une parmi :
la réception des informations d'intérêt de CHO signalées sur initiative et enregistrées par le terminal ;
l'envoi d'une demande au terminal, et la réception des informations d'intérêt de CHO signalées par le terminal sur la base de la demande ; ou
la réception d'informations d'intérêt à enregistrer informées par le terminal, l'envoi d'une demande sur la base des informations informées à enregistrer et la réception des informations d'intérêt de CHO signalées par le terminal sur la base de la demande.

13. Terminal, comprenant : un premier processeur et une première mémoire configurée pour stocker un programme informatique exécutable par le processeur ;
le premier processeur est configuré pour exécuter, lors de l'exécution du programme informatique, les étapes du procédé de l'une quelconque des revendications 1 à 7.

14. Dispositif de réseau, comprenant : un deuxième processeur et une deuxième mémoire configurée pour stocker un programme informatique exécutable par le processeur ;
le deuxième processeur est configuré pour exécuter, lors de l'exécution du programme informatique, les étapes du procédé de l'une quelconque des revendications 8 à 12.
